# EUROPÄISCHE PATENTSCHRIFT

(11) **EP 1 937 991 B1**
(45) Veröffentlichungstag und Bekanntmachung des Hinweises auf die Patenterteilung: **15.02.2012**
(21) Anmeldenummer: 06805367.7
(22) Anmeldetag: 06.10.2006
(51) Int. Cl.: F16D 23/14, F16D 25/08

(54) **NEHMERZYLINDER MIT AXIAL SPIELBEHAFTETEM RINGKOLBEN**
SLAVE CYLINDER WITH ANNULAR PISTON HAVING AXIAL CLEARANCE
CYLINDRE RECEPTEUR AVEC PISTON ANNULAIRE PRESENTANT UN JEU AXIAL

(30) Priorität: 11.10.2005 DE 102005048615
(43) Veröffentlichungstag der Anmeldung: 02.07.2008
(73) Patentinhaber: Schaeffler Technologies GmbH & Co. KG, 91074 Herzogenaurach (DE)
(72) Erfinder: RAMMHOFER, Thomas, 77880 Sasbach (DE)
(86) Internationale Anmeldenummer: PCT/DE2006/001747
(87) Internationale Veröffentlichungsnummer: WO 2007/041990

(56) Entgegenhaltungen:
- EP-A- 1 146 244
- EP-A1- 0 380 401
- EP-A1- 1 152 161
- DE-A1- 19 716 218
- DE-A1- 19 835 707

## Beschreibung

Die vorliegende Erfindung betrifft eine Ausrückvorrichtung für eine Kupplung, insbesondere eine Kupplung im Antriebsstrang eines Kraftfahrzeuges, mit einem Nehmerzylinder, der ein Gehäuse aufweist, das konzentrisch zu einer Getriebeeingangswelle angeordnet ist, wobei in einem Druckraum ein Ringkolben angeordnet ist, der mit einem Ausrücklager zusammenwirkt.

Eine gattungsgemäße Ausrückvorrichtung ist beispielsweise aus der WO 97/33097 bekannt. In der dortigen Anordnung wird vorgeschlagen, eine druckraumseitige Dichtung, deren Dichtlippen V-förmig radial gespreizt angeordnet sind, mit einem axialen und radialen Freiheitsgrad formschlüssig am Ringkolben anzuordnen. Das Ausrücklager ist fest an den Ringkolben angebunden.

Nachteilig an der Anordnung nach Stand der Technik ist, dass durch Zungenschlag oder Axialbewegungen der Tellerfedern diese axialen und radialen Bewegungen auf den Ringkolben übertragen werden. Um diese Bewegungen zumindest im drucklosen Zustand von der Dichtung abzukoppeln, dies betrifft mehr als 90% Zeitanteil im Fahrbetrieb eines Kraftfahrzeuges, wird die schwimmende Anbindung der Dichtung an den Ringkolben gemäß Stand der Technik gewählt. Nachteilig dabei ist, dass die Kupplung die Dichtung auch unbeabsichtigt wegdrücken kann, zusätzlich wird eine sensible Nachsaugeinrichtung im Geberzylinder benötigt, die Unterdrücke sicher vermeidet, damit die Dichtung nicht vom Ringkolben gezogen wird. Größere Spiele zwischen Dichtung und Ringkolben führen zu Trennproblemen und Pedalhängern. Des Weiteren kann sich eine abgehobene Dichtung im Betrieb verdrehen oder verkippen und dadurch zur Leckage des Nehmerzylinders führen. Alternativ werden statt schwimmend angebundener Dichtungen auch fest angebundene Dichtungen verwendet. Diese haben zusätzlich den Nachteil, dass die Dichtung im drucklosen Zustand gezwungen ist, den über den Ringkolben übertragenen Bewegungen zu folgen, was einen hohen Dichtungsverschleiß zur Folge haben kann. In diesem Fall hat die Dichtungsreibung auch direkten Einfluss auf die Lagervorlast des Ausrücklagers und kann diese im ungünstigsten Fall wesentlich herabsetzen, was zu Ausrücklagerschäden oder Geräuschproblemen führen kann.

Durch die radial und axial spielbehaftete Dichtungsanbindung an den Ringkolben werden die Bewegungen des Ringkolbens im Wesentlichen von der Dichtung abgekoppelt. Aus Festigkeitsgründen ist der Dichtungsträger aus Stahl gefertigt. Nachteilig daran ist, dass der Dichtungsträger das Gehäuse oder die Führungshülse beschädigen kann, dies insbesondere wenn beide aus einem weicheren Werkstoff, beispielsweise aus Kunststoff, hergestellt wurden.

Weiterhin ist eine Ausrückvorrichtung, wobei der Ringholben und das Ausrücklager axial und radial spielbehaftet verbunden sind, z.B. aus EP-A-1152161 bekannt.

Aufgabe der vorliegenden Erfindung ist es daher, mögliche Beschädigungen einer Kunststoffführungshülse, die sich aus einem Dichtungsträger aus Metall ergeben können, zu vermeiden.

Diese Aufgabe wird gelöst durch eine Ausrückvorrichtung gemäß Anspruch 1. Ein Dichtringträger kann dabei die Dichtung, die den Druckraum gegenüber dem Ringkolben abdichtet und druckraumseitig an dem Ringkolben angeordnet ist, aufnehmen und hält diese mit einem radialen und/oder axialen Spiel am Ringkolben. Ein Trägerblech kann über eine Klipsverbindung am Ringkolben befestigt sein und nimmt mit einem radialen Spiel den Lagerinnenring auf. Die Verbindung wird mit einer Tellerfeder gehalten. Der Lagerinnenring und das Gehäuse haben jeweils einen Vorsprung der als Verdrehsicherung dient, diese wird über eine Vorlastfeder übertragen. Taumelbewegungen und axiale Schwingungen werden von der Tellerfeder über das Ausrücklager auf den Ringkolben übertragen. Der Dichtringträger koppelt die Schwingungen zur Dichtung hin ab. Aus Festigkeitsgründen besteht der Dichtringträger aus Stahl und beschädigt beim Kontakt mit der Führungshülse die Dichtungslaufbahn. Aus diesem Grund muss die Führungshülse eine harte, verschleißfeste Beschichtung aufweisen.

Vorzugsweise ist dabei vorgesehen, dass ein Lageraußenring des Ausrücklagers mit einer Tellerfeder verbunden ist und ein Lagerinnenring des Ausrücklagers mit dem Ringkolben des Nehmerzylinders verbunden ist. Die spielbehaftete Anbindung des Ausrücklagers an den Ringkolben sowie den Lagerinnenring wird in einem Trägerblech gehalten, das in radialer Richtung Kräfte aufnehmen kann um die Funktion der Lagerzentrierung zu gewährleisten, gleichzeitig aber in axialer Richtung eine spielbehaftete Anbindung zum Ringkolben aufweist. Weist diese Einrichtung einen nach innen gerichteten Konus oder eine konische Tellerfeder zur Befestigung des Lagerinnenrings des Ausrücklagers an dem Trägerblech auf, so kann diese Vorrichtung zusätzlich den Zungenschlag der Kupplung analog der Funktion eines Schlagausgleichslagers ausgleichen.

Erfindungsgemäß ist vorgesehen, dass die Verbindung zwischen dem Lagerinnenring und dem Ringkolben des Nehmerzylinders ein Rastmittel umfasst, das durch Einrasten in ein Haltemittel in einer Raststellung mit dem Ringkolben verbindbar ist und in der eingerasteten Stellung eine formschlüssige axial und radial spielbehaftete Verbindung zwischen dem Ringkolben und dem Rastmittel ergibt. Der Dichtringträger erlaubt eine einfache Montage der Dichtung und kann durch geeignete Geometrie und Materialwahl auf eine leichte Montage, beispielsweise durch axiales aufstecken mit einer Rastverbindung, optimiert werden.

Das Rastmittel zur Verbindung des Außenringes der Kolbenhülse kann vorteilhaft eine Federzunge sein, die an einem Trägerblech angeordnet ist. Das Rastmittel ermöglicht eine einfache Montage durch axiales Aufschieben, wobei eine formschlüssige axial spielbehaftete Verbindung hergestellt wird. Das Haltemittel kann dabei eine Ringnut oder eine ringförmige Nase sein. Die Federzunge weist in Einbaulage vorzugsweise einen axialen Mindestabstand von etwa 0,6 mm von der ringförmigen Nase auf. Die Federzunge weist in Einbaulage vorzugsweise einen radialen Mindestabstand von etwa 0,15 mm von der Kolbenhülse auf. In einer Weiterbildung der Erfindung ist vorgesehen, dass das Gehäuse und die Führungshülse ein einstückiges Kunststoffbauteil sind, der Nehmerzylinder also ein Vollkunststoffgehäuse, das ggf. teilweise armiert bzw. aus einem Verbundmaterial gefertigt sein kann, aufweist.

Im Folgenden werden Ausführungsbeispiele der Erfindung anhand der beiliegenden Zeichnungen erläutert. Dabei zeigen:
- Fig. 1: eine schematische Darstellung eines Antriebsstranges mit einer Kupplungsausrückvorrichtung;
- Fig. 2: einen Schnitt durch ein erstes Ausführungsbeispiel eines Nehmerzylinders;
- Fig. 3: einen Schnitt durch ein zweites Ausführungsbeispiel eines Nehmerzylinders;
- Fig. 4: einen Schnitt durch ein drittes Ausführungsbeispiel eines Nehmerzylinders;
- Fig. 5: eine vergrößerte Darstellung des Trägerblechs gemäß Fig. 4.

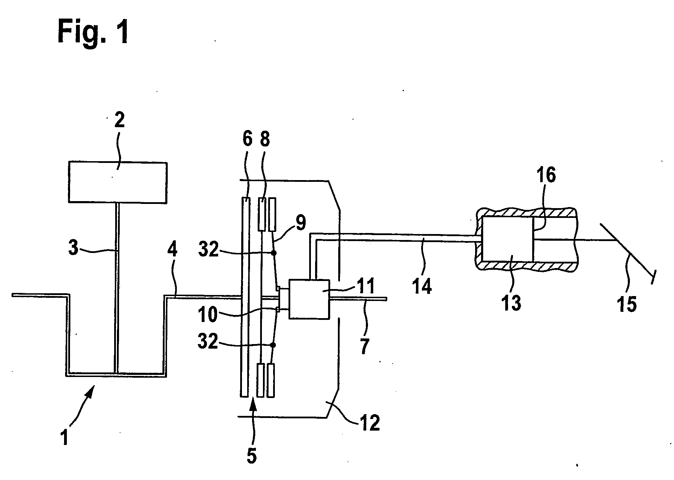

Fig. 1 zeigt eine schematische Darstellung eines Teils eines Antriebsstranges mit einer Kupplungsausrückvorrichtung. Grob skizziert dargestellt ist eine Brennkraftmaschine 1, bei der ein Kolben 2 über ein Pleuel 3 auf eine Kurbelwelle 4 wirkt. Die Kurbelwelle 4 ist verbunden mit einer Fahrzeugkupplung 5. Die Fahrzeugkupplung 5 umfasst in an sich bekannter Weise eine fest mit der Kurbelwelle verbundene Kupplungsscheibe 6 sowie eine drehfest mit einer Getriebeeingangswelle 7 verbundene Kupplungsscheibe 8, die über eine Tellerfeder 9 an die Kupplungsscheibe 6 angedrückt werden kann und so im angedrückten und damit eingekuppelten Zustand ein Drehmoment übertragen kann. Die Tellerfeder ist um konzentrisch angeordnete Lagerpunkte 32 drehbar bzw. durchdrückbar gelagert. Wird die Tellerfeder 9 radial innerhalb der Lagerpunkte 32 in axialer Richtung mit einer Kraft beaufschlagt, so wird der radial außerhalb der Lagerpunkte 32 befindliche Teil der Tellerfeder in die Gegenrichtung bewegt. An der Tellerfeder 9 ist ein Ausrücklager 10 angeordnet, auf das ein Nehmerzylinder 11 in an sich bekannter Art wirkt. Der Nehmerzylinder 11 ist konzentrisch um die Getriebeeingangswelle 7 angeordnet. Das Ausrücklager und der Nehmerzylinder 11 bilden ein Kupplungsausrücksystem 16. Die Fahrzeugkupplung 5, das Ausrücklager sowie der Nehmerzylinder 11 sind in einer Kupplungsglocke 12 angeordnet, wobei der Nehmerzylinder 11 und die Kupplungsglocke 12 wie nachfolgend dargestellt miteinander verbunden sind. An die Kupplungsglocke 12 ist ein hier nicht dargestelltes Getriebe angeflanscht. Ein Geberzylinder 13 mit einem Geberzylinderkolben 13a ist über eine Druckmediumsleitung 14 mit dem Nehmerzylinder 11 verbunden. Der Geberzylinderkolben 13a kann mittels eines Aktors 15, der ein elektromechänischer Aktor, ein Fußpedal oder dergleichen sein kann, mit Druck beaufschlagt werden. Dadurch wird das hydraulische System umfassend den Geberzylinder 13, die Druckmediumsleitung 14 und den Nehmerzylinder 11 mit Druck beaufschlagt, sodass der Nehmerzylinder 11 betätigt wird und über das Ausrücklager 10 die Tellerfeder 9 betätigt und die Kupplung ausrückt bzw. bei einer aktiv zugedrückten Kupplung diese schließt.

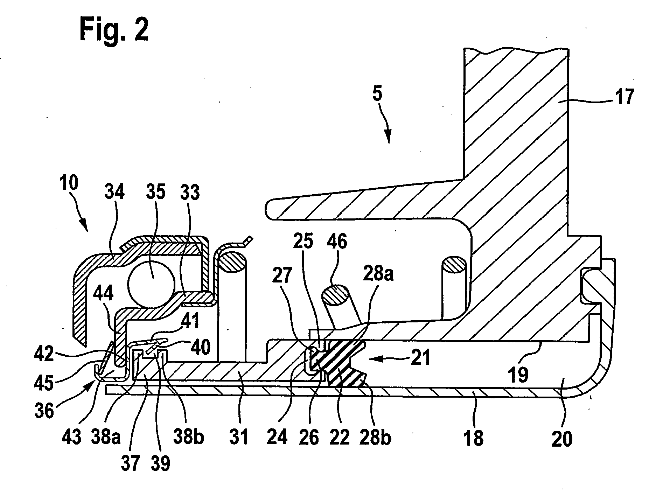

Im Folgenden wird auf Fig. 2 Bezug genommen. Der Nehmerzylinder 11 umfasst ein Gehäuse 17, an dem eine Führungshülse 18 angeordnet ist. Die Führungshülse 18 umgreift eine nicht dargestellte Getriebeeingangswelle. Von einer inneren Lauffläche 19 und der Führungshülse 18 wird ein Druckraum 20 gebildet, in der ein Ringkolben 21 verschiebbar angeordnet ist. Der Ringkolben 21 umfasst eine Dichtung 22, die an einer Kolbenhülse 31 des Ringkolbens 21 befestigt ist. Der Ringkolben 21 umfasst dazu eine sich in axialer Richtung erstreckende Ringnut 24 mit einer umlaufenden Nase 25, in die ein Vorsprung 26 mit einer umlaufenden Kante 27 der Dichtung 22 eingreift. Die Dichtung 22 ist aus Kunststoff gefertigt und umfasst zwei Dichtlippen 28a, 28b, die durch den Druck in dem Druckraum 20 an die innere Lauffläche 19 bzw. die Führungshülse 18 gepresst werden und so den Druckraum 20 nach außen hin abdichten. Die umlaufende Kante 27 mit dem Vorsprung 26 sowie die Ringnut 24 mit der Nase 25 bilden eine formschlüssige Verbindung nach Art eines Clips zwischen der Dichtung 22 und dem Ringkolben 21. Die Dichtung 22 ist aus Kunststoff gefertigt. Die Kolbenhülse 31 und die Dichtung 22 sind auf diese Weise jeweils formschlüssig miteinander verbunden und sind sowohl axial als auch radial im Wesentlichen spielfrei zueinander angeordnet.

Der Ringkolben 21 wirkt auf ein Ausrücklager 10, welches einen Lagerinnenring 33 und einen Lageraußenring 34 umfasst, zwischen denen Kugeln 35 eines Kugellagers angeordnet sind. Der Lagerinnenring 33 ist mit einem Trägerblech 36 mit der Kolbenhülse 31 verbunden. Dazu umfasst die Kolbenhülse 31 einen im Querschnitt U-förmigen Außenring 37, wobei zwischen den einzelnen Schenkeln 38a, 38b des Außenringes 37 eine umlaufende Ringnut 39 gebildet wird. In die umlaufende Ringnut 39 greift eine sich radial schräg erstreckende umlaufende Federzunge 40, der an einem sich axial erstreckenden Trägerrohr 41 des Trägerblechs 36 angeordnet ist, ein. Die Federzunge 40 ist axial beweglich zwischen den Schenkeln 38a, 38b in der Ringnut 39 gelagert. Das Trägerrohr 41 geht mit einer Abkantung 42 über in einen Hohlumschlag 43, mit dem das Trägerblech 36 einen Teller 44 des Lagerinnenrings 33 umgreift. Der Teller 44 ist mit einem radialen Spiel in dem Hohlumschlag 43 gelagert. Eine konische Tellerfeder 45 legt den Teller 44 in axialer Richtung gegenüber dem Trägerblech 36 fest.

Zwischen dem Gehäuse 17 des Nehmerzylinders 11 und dem Lagerinnenring 33 ist eine Vorlastfeder 46 angeordnet, die mit Hilfe von Nasen und Vorsprüngen ein Drehmoment zwischen beiden Teilen übertragen kann und so den Lagerinnenring 33 gegen Verdrehung gegenüber dem Gehäuse 17 festlegt.

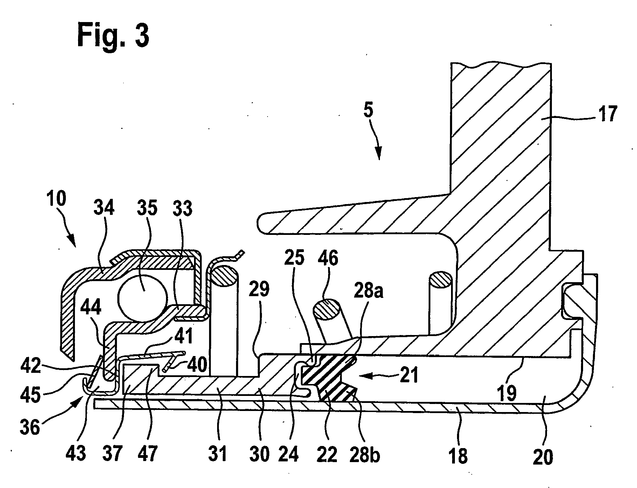

Fig. 3 zeigt eine alternative Ausführungsform einer erfindungsgemäßen Ausrückvorrichtung für eine Kupplung. Im Unterschied zu dem Ausführungsbeispiel gemäß Fig. 2 liegt der Außenring 37 nicht zwischen den Schenkeln 38a, 38b, die eine Ringnut 39 bilden. Stattdessen wird eine ringförmige Nase 47 des Außenringes 37 bzw. der Außenring 37 als solches vollständig von der Federzunge 40 des Trägerrohres 41 umgriffen.

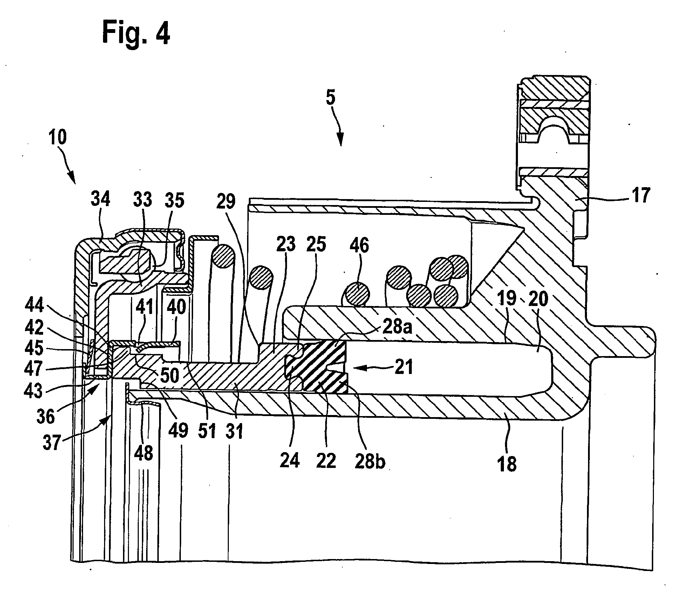

Fig. 4 zeigt ein alternatives Ausführungsbeispiel der erfindungsgemäßen Ausrückvorrichtung mit einem Nehmerzylinder, bei dem das Gehäuse 17 und die Führungshülse 18 ein einstückiges Kunststoffbauteil bilden. Die Führungshülse 18 ist daher gegenüber der Ausführungsform mit einer Führungshülse als Metallhülse entsprechend der Figuren 2 und 3 mit einer größeren Wandstärke ausgeführt. Ein Anschlagring 48, der nach Einführen des Ringkolbens 21 in den Druckraum 20 aufgeclipst wird, begrenzt den Weg des Ringkolbens 21. In die Kolbenhülse 31 ist dazu an deren Stirnseite, also der von der Dichtung 22 abgewandten Seite, eine Stufenbohrung 49 eingebracht, deren axiale Tiefe t den zulässigen Weg des Ringkolbens 21, bis dieser an den Anschlagring 48 anschlägt, bestimmt.

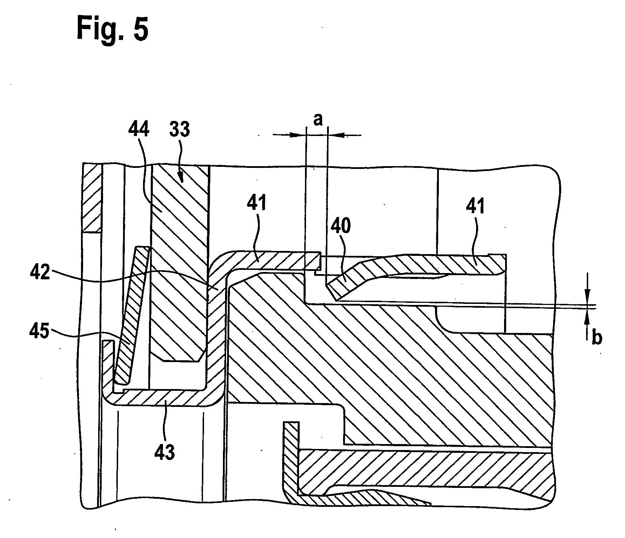

Fig. 5 zeigt eine detailliertere Darstellung des Trägerbleches 36 sowie des mit diesem zusammenwirkenden Bereiches der Kolbenhülse 31 in Fig. 4. Das Trägerblech 36 hat einen Aufbau entsprechend der Darstellung der Fig. 3 bzw. der Fig. 4. Das Trägerblech 36 umfasst wie zuvor dargestellt das sich im Wesentlichen axial erstreckende Trägerrohr 41, an dem die Federzungen 40 angeordnet sind. Der Teller 44, der Hohlumschlag 43 sowie die Tellerfeder 45 stellen eine formschlüssige Verbindung des Trägerblechs 36 mit dem Lagerinnenring 33 her. An die Nase 47 schließt sich axial in Richtung der Dichtung 22 eine erste Stufe 50 mit geringerem Außendurchmesser als die Nase 47 an. Weiter axial in Richtung der Dichtung 22 schließt sich eine weitere Stufe 51 mit wiederum geringerem Durchmesser als die erste Stufe 50 an. Die Stufen 50, 51 sorgen dafür, dass die Wanddicke der Kolbenhülse 31 auch im Bereich der Stufenbohrung 49 keine großen Sprünge macht.

Jede Federzunge 40 wird gebildet durch das teilweise Ausstanzen kleiner sich sowohl axial als auch in Umfangsrichtung des Trägerrohres 41 erstreckender Bereiche, so dass wie in Fig. 5 zu erkennen ist, jeweils kleine radial nach innen gebogene Bereiche des Trägerrohres 41 entstehen, die gegen Federkraft wieder nach außen gebogen werden können. Die Federzungen 40 sind dabei an der in axialer Richtung der Dichtung 22 zugewandten Seite einstückig mit dem Trägerrohr verbunden und ansonsten nicht mit diesem verbunden. Dadurch ist es möglich, das Trägerblech 36 zur Montage über die ringförmige Nase 47 des Außenringes 37 zu schieben, wobei die Federzungen 40 nach außen gedrückt werden und eine rastende Verbindung mit axialem Spiel entsteht. Das axiale Spiel a beträgt dabei vorzugsweise etwa 0,6 mm. Die Kolbenhülse 31 kann also etwa um 0,6 mm axial gegenüber dem Trägerblech 36 bewegt werden. Der minimale Abstand b zwischen der Federzunge 40 und dem Außenring 37 beträgt etwa 0,15 mm, so dass der nach innen gebogene Bereich der Federzunge 40 nicht direkt in Kontakt mit dem Außenring 37 ist und ein Spiel verbleibt.

### Bezugszeichenliste

- 1: Brennkraftmaschine
- 2: Kolben
- 3: Pleuel
- 4: Kurbelwelle
- 5: Fahrzeugkupplung
- 6: Kurbelwellenseitige Kupplungsscheibe
- 7: Getriebeeingangswelle
- 8: Getriebeseitige Kupplungsscheibe
- 9: Tellerfeder
- 10: Ausrücklager
- 11: Nehmerzylinder
- 12: Kupplungsglocke
- 13: Geberzylinder
- 13a: Geberzylinderkolben
- 14: Druckmediumsleitung
- 15: Aktor
- 16: Kupplungsausrücksystem
- 17: Gehäuse Nehmerzylinder
- 18: Führungshülse
- 19: Innere Lauffläche
- 20: Druckraum
- 21: Ringkolben
- 22: Dichtung
- 24: Ringnut
- 25: Nase
- 26: Vorsprung
- 27: Umlaufende Kante
- 28a, 28b: Dichtlippen
- 31: Kolbenhülse
- 32: Lagerpunkte
- 33: Lagerinnenring
- 34: Lageraußenring
- 35: Kugeln
- 36: Trägerblech für Ausrücklager
- 37: Außenring
- 38a, 38b: Schenkel
- 39: Ringnut
- 40: Federzunge
- 41: Trägerrohr
- 42: Abkantung
- 43: Hohlumschlag
- 44: Teller
- 45: Tellerfeder
- 46: Vorlastfeder
- 47: Ringförmige Nase
- 48: Anschlagring
- 49: Stufenbohrung
- 50: Erste Stufe
- 51: Weitere Stufe

## Patentansprüche

1. Ausrückvorrichtung für eine Kupplung, insbesondere eine Fahrzeugkupplung (5) im Antriebsstrang eines Kraftfahrzeuges, mit einem Nehmerzylinder (11), der ein Gehäuse (17) aufweist, das im eingebauten zustand konzentrisch zu einer Getriebeeingangswelle (7) angeordnet ist, wobei in einem Druckraum (20) ein Ringkolben (21) mit einer Dichtung (22) angeordnet ist, der mit einem Ausrücklager (10) zusammenwirkt und der Ringkolben (21) und das Ausrücklager (10) axial und radial spielbehaftet miteinander verbunden sind, **dadurch gekennzeichnet, dass** die Verbindung zwischen dem Lagerinnenring (33) und dem Ringkolben (21) des Nehmerzylinders (11) ein Rastmittel (40) umfasst, das durch Einrasten in ein Haltemittel (39) in einer Raststellung mit dem Ringkolben (21) verbindbar ist und in der eingerasteten Stellung eine formschlüssige axial und radial spielbehaftete Verbindung zwischen dem Ringkolben (21) und dem Rastmittel (40) ergibt.

2. Ausrückvorrichtung nach Anspruch 1, **dadurch gekennzeichnet, dass** ein Lageraußenring des Ausrücklagers mit einer Tellerfeder verbunden ist und ein Lagerinnenring (33) des Ausrücklagers (10) mit dem Ringkolben (21) des Nehmerzylinders (11) verbunden ist.

3. Ausrückvorrichtung nach einem der vorhergehenden Ansprüche, **dadurch gekennzeichnet, dass** das Rastmittel eine Federzunge (40) ist, die an einem Trägerblech (36) angeordnet ist.

4. Ausrückvorrichtung nach einem der vorhergehenden Ansprüche, **dadurch gekennzeichnet, dass** das Haltemittel eine Ringnut (39) ist.

5. Ausrückvorrichtung nach einem der vorhergehenden Ansprüche, **dadurch gekennzeichnet, dass** das Haltemittel eine ringförmige Nase (47) ist.

6. Ausrückvorrichtung nach einem der vorhergehenden Ansprüche, **dadurch gekennzeichnet, dass** die Federzunge (40) in Einbaulage einen axialen Mindestabstand (a) von etwa 0,6 mm von der ringförmigen Nase (47) aufweist.

7. Ausrückvorrichtung nach einem der vorhergehenden Ansprüche, **dadurch gekennzeichnet, dass** die Federzunge (40) in Einbaulage einen radialen Mindestabstand (b) von etwa 0,15 mm von der Kolbenhülse (31) aufweist.

8. Ausrückvorrichtung nach einem der vorhergehenden Ansprüche, **dadurch gekennzeichnet, dass** das Gehäuse (17) und die Führungshülse (18) ein einstückiges Kunststoffbauteil sind.

## Claims

1. Release device for a clutch, in particular a vehicle clutch (5) in the drivetrain of a motor vehicle, having a slave cylinder (11) which has a housing (17) which, in the installed state, is arranged concentrically with respect to a gearbox input shaft (7), wherein in a pressure chamber (20) there is arranged an annular piston (21) with a seal (22), which annular piston interacts with a release bearing (10), and the annular piston (21) and the release bearing (10) are connected to one another with axial and radial play, **characterized in that** the connection between the bearing inner ring (33) and the annular piston (21) of the slave cylinder (11) comprises a latching means (40) which can be connected to the annular piston (21) by latching into a retaining means (39) in a latching position and which, in the latched position, creates a positively locking connection, which has axial and radial play, between the annular piston (21) and the latching means (40).

2. Release device according to Claim 1, **characterized in that** a bearing outer ring of the release bearing is connected to a disc spring, and a bearing inner ring (33) of the release bearing (10) is connected to the annular piston (21) of the slave cylinder (11).

3. Release device according to one of the preceding claims, **characterized in that** the latching means is a spring tongue (40) which is arranged on a carrier plate (36) .

4. Release device according to one of the preceding claims, **characterized in that** the retaining means is an annular groove (39).

5. Release device according to one of the preceding claims, **characterized in that** the retaining means is an annular lug (47).

6. Release device according to one of the preceding claims, **characterized in that**, in the installed position, the spring tongue (40) has an axial minimum spacing (a) of approximately 0.6 mm from the annular lug (47).

7. Release device according to one of the preceding claims, **characterized in that**, in the installed position, the spring tongue (40) has a radial minimum spacing (b) of approximately 0.15 mm from the piston sleeve (31).

8. Release device according to one of the preceding claims, **characterized in that** the housing (17) and the guide sleeve (18) are a single-piece plastic component.

## Revendications

1. Dispositif de débrayage pour un embrayage, en particulier un embrayage de véhicule (5) dans la chaîne cinématique d'un véhicule automobile, comprenant un cylindre récepteur (11), qui présente un boîtier (17) qui est disposé dans l'état monté de manière concentrique à un arbre d'entrée de transmission (7), un piston annulaire (21) avec un joint d'étanchéité (22) étant disposé dans un espace de pression (20), et coopère avec un palier de débrayage (10), le piston annulaire (21) et le palier de débrayage (10) étant connectés l'un à l'autre avec un jeu axial et radial, **caractérisé en ce que** la connexion entre la bague de palier interne (33) et le piston annulaire (21) du cylindre récepteur (11) comprend un moyen d'encliquetage (40) qui peut être connecté par encliquetage dans un moyen de retenue (39) dans une position d'encliquetage au piston annulaire (21), et **en ce que** dans la position encliquetée, une connexion par engagement positif à jeu axial et radial est réalisée entre le piston annulaire (21) et le moyen d'encliquetage (40).

2. Dispositif de débrayage selon la revendication 1, **caractérisé en ce qu'**une bague extérieure de palier du palier de débrayage est connectée à un ressort Belleville et une bague de palier interne (33) du palier de débrayage (10) est connectée au piston annulaire (21) du cylindre récepteur (11).

3. Dispositif de débrayage selon l'une quelconque des revendications précédentes, **caractérisé en ce que** le moyen d'encliquetage est une langue à ressort (40), qui est disposée sur une tôle de support (36).

4. Dispositif de débrayage selon l'une quelconque des revendications précédentes, **caractérisé en ce que** le moyen de retenue est une rainure annulaire (39).

5. Dispositif de débrayage selon l'une quelconque des revendications précédentes, **caractérisé en ce que** le moyen de retenue est un nez de forme annulaire (47).

6. Dispositif de débrayage selon l'une quelconque des revendications précédentes, **caractérisé en ce que** la langue à ressort (40) présente, dans la position de montage, une distance axiale minimale (a) d'environ 0,6 mm depuis le nez de forme annulaire (47).

7. Dispositif de débrayage selon l'une quelconque des revendications précédentes, **caractérisé en ce que** la langue à ressort (40) présente, dans la position de montage, une distance radiale minimale (b) d'environ 0,15 mm depuis la douille de piston (31).

8. Dispositif de débrayage selon l'une quelconque des revendications précédentes, **caractérisé en ce que** le boîtier (17) et la douille de guidage (18) sont un composant en plastique d'une seule pièce.
